# EUROPÄISCHE PATENTSCHRIFT

(11) **EP 1 582 381 B1**
(45) Veröffentlichungstag und Bekanntmachung des Hinweises auf die Patenterteilung: **26.08.2009**
(21) Anmeldenummer: 05006296.7
(22) Anmeldetag: 22.03.2005
(51) Int. Cl.: B60G 11/16

(54) **Abstütz- und Zentriereinrichtung für einen Federteller, insbesondere eines Kraftfahrzeugs**
Support and centering device for a spring plate, specifically for a motor vehicle
Dispositif pour supporter et centrer une coupelle, en particulier pour un véhicule automobile

(30) Priorität: 01.04.2004 DE 102004016136
(43) Veröffentlichungstag der Anmeldung: 05.10.2005
(73) Patentinhaber: Bayerische Motoren Werke Aktiengesellschaft, 80809 München (DE)
(72) Erfinder: Sturm, Rudolf-Axel, 81375 München (DE); Schmidt, Stefan, 81739 München (DE)

(56) Entgegenhaltungen:
- EP-A- 1 462 343
- FR-A- 2 702 710
- FR-A- 2 712 862
- US-A- 4 213 631
- US-A- 4 723 811
- US-A- 5 011 201
- US-A- 6 109 653
- US-A- 6 135 498
- US-B1- 6 470 554
- PATENT ABSTRACTS OF JAPAN Bd. 2002, Nr. 08, 5. August 2002 (2002-08-05) -& JP 2002 103940 A (KAYABA IND CO LTD), 9. April 2002 (2002-04-09)
- PATENT ABSTRACTS OF JAPAN Bd. 2000, Nr. 21, 3. August 2001 (2001-08-03) -& JP 2001 106133 A (HONDA MOTOR CO LTD), 17. April 2001 (2001-04-17)

## Beschreibung

Die Erfindung betrifft eine Abstütz- und Zentriereinrichtung für einen Federteller, mit den im Oberbegriff des Patentanspruches 1 angegebenen Merkmalen.

Eine derartige Abstütz- und Zentriereinrichtung weist in der EP-A-1 375 317 einen Federteller zur Abstützung eines Federelements auf, der mit einem kegelstumpfförmigen Ansatz versehen ist. Die Vorspannkraft des Federelements belastet den kegelstumpfförmigen Ansatz des Federtellers in eine entsprechende kegelstumpfförmige Aufnahme an einem Stützelement eines Radhauses. Der kegelstumpfförmige Ansatz des Federtellers und die kegelstumpfförmige Aufnahme des Stützelements sind jeweils mit einer axialen Durchgangsöffnung versehen, die von einem radial inneren Stützteil und einer zentralen Kolbenstange durchsetzt sind. Eine Gewindemutter, die auf ein Gewinde der Kolbenstange von oben aufschraubbar ist, fixiert einen Federhalter an dem Stützteil und an der Kolbenstange, der radial elastische Blattabschnitte aufweist. Bei der Montage der Abstütz- und Zentriereinrichtung durchdringen das radial innere Stützteil und der damit verbundene Federhalter die radial inneren Durchgangsöffnungen im kegelstumpfförmigen Ansatz des Federtellers und in der kegelstumpfförmigen Aufnahme des Stützelements, wobei die radial elastischen Blattabschnitte des Federhalters radial nach innen elastisch ausweichen und nach einem axialen Durchtritt durch die Durchgangsöffnungen eine mit dem oberen Rand der kegelstumpfförmigen Aufnahme des Stützelements verbundene Stützfläche mit einem axialen Abstand hintergreifen. Für eine Demontage oder einen Austausch des Federtellers ist es deshalb erforderlich, dass nach dem Abschrauben der Mutter von der Kolbenstange der Federhalter vorab abgenommen wird, da er sich nicht durch die Durchtrittsöffnungen im kegelstumpfförmigen Ansatz des Federtellers und in der kegelstumpfförmigen Aufnahme des Stützelements hindurch nach unten verstellen lässt. Die radial inneren Durchgangsöffnungen im kegelstumpfförmigen Ansatz des Federtellers und in der kegelstumpfförmigen Aufnahme des Stützelements schwächen den Federteller insbesondere im Bereich seines kegelstumpfförmigen Ansatzes und schwächen die kegelstumpfförmige Aufnahme des Stützelements. Unter den im Fahrbetrieb auftretenden Belastungen dürfte es deshalb zumindest nach einiger Zeit vorkommen, dass der kegelstumpfförmige Ansatz des Federelements und/oder die kegelstumpfförmige Aufnahme des Stützelements derart verformt ist bzw. sind, dass der kegelstumpfförmige Ansatz des Federelements gegenüber der kegelstumpfförmigen Aufnahme des Stützelements zumindest bereichsweise ein radiales Spiel aufweist und dadurch radiale Bewegungen ausführen kann, die sich auf den Fahrzustand des Fahrzeugs störend auswirken können und eventuell auch akustisch bemerkbar sind. Die kegelstumpfförmige Aufnahme ist an einem Stützelement eines Radhauses nicht lösbar befestigt und durch ein größeres Bauteil gebildet, das neben der Abstützung des Federtellers auch andere Aufgaben erfüllt. Die kegelstumpfförmige Aufnahme kann deshalb auch auf andere Weise zusätzlich belastet und verformt werden.

In der US-A-6 109 653 ist eine Abstütz- und Zentriereinrichtung für ein Federelement an einem Fahrzeug beschrieben, bei der kein Federteller verwendet ist. Das obere Ende des Federelements ist direkt an der Bodenwand einer Vertiefung am Karosserieboden abgestützt, die radial innen mit einem etwa zylindrischen Topf verbunden und radial außen von einer kegelstumpfförmigen Wand begrenzt ist, die unten mit der unteren Wand des Karosserierahmens und oben mit der Unterseite eines Versteifungselements jeweils verschweißt und damit unlösbar verbunden ist. Das Federelement weist größere radiale Abstände von dem zylindrischen Topf und der kegelstumpfförmigen Wand auf und kann deshalb im Fahrbetrieb radiale Bewegungen ausführen, die zumindest kleinere Änderungen der Radaufstandkräfte bewirken können, die das Fahrverhalten des Fahrzeugs zumindest geringfügig beeinflussen.

Der Erfindung liegt die Aufgabe zu Grunde, eine Abstütz- und Zentriereinrichtung für einen Federteller, insbesondere eines Kraftfahrzeugs, mit den Merkmalen im Oberbegriff des Patentanspruches 1 anzugeben, die eine größere Stabilität aufweist, einfacher und kostengünstiger zu fertigen ist und einen einfacheren Ausbau und/oder Austausch des Federtellers ermöglicht.

Diese Aufgabe ist durch die im Patentanspruch 1 angegebenen Merkmale gelöst. Vorteilhafte Ausgestaltungen der Erfindung sind den Unteransprüchen entnehmbar.

Die Ausbildung der kegelstumpfförmigen Aufnahme an einem separaten Teil ermöglicht eine einfache und kostengünstige Fertigung der Aufnahme, die mit einfachen Mitteln, beispielsweise über Schweißpunkte, lösbar oder unlösbar an einem Wandbereich zu befestigen ist. Das separate Teil kann ein aus einer Blechplatte gefertigtes Tiefziehteil sein, das keine maschinelle Nachbehandlung erfordert. Der Federteller und sein axialer Ansatz sind ebenfalls kostengünstig beispielsweise als einziges Tiefziehteil zu fertigen. Der Federteller kann durch einen anderen Federteller mit einem vergleichbaren axialen Ansatz ersetzt werden, an dem sich ein anderes Federelement, beispielsweise eine im Durchmesser größere oder kleinere Schraubenfeder oder Luftfeder abstützen kann. Es ist auch möglich, dass sich an dem ursprünglichen oder ausgetauschten Federteller mehrere Schraubenfedern und/oder Luftfedern abstützen. Bei einem Austausch des Federtellers ist lediglich der axiale Ansatz des Federtellers aus der kegelstumpfförmigen Aufnahme des separaten Teiles zu entfernen, wofür eine entsprechende axiale Kraft erforderlich ist, die durch eine Vergrößerung des Kegelwinkels des kegelstumpfförmigen Ansatzes und der kegelstumpfförmigen Aufnahme zu vermindern ist.

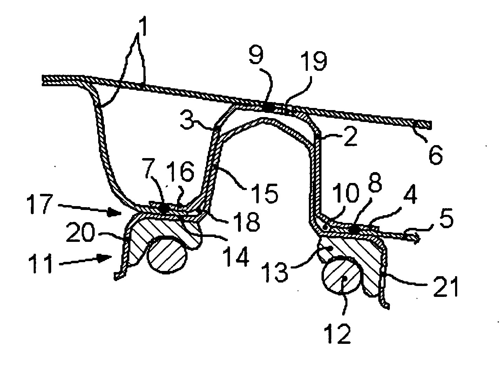

Ein Ausführungsbeispiel der Erfindung wird an Hand einer Zeichnung mit einer einzigen Figur näher erläutert, die einen Querschnitt durch die Abstütz- und Zentriereinrichtung eines Federtellers darstellt, der zur oberen Abstützung einer Schraubenfeder an einem Hinterachsträger eines Kraftfahrzeugs vorgesehen ist.

Die in der einzigen Figur dargestellte Abstütz- und Zentriereinrichtung für einen Federteller ist an dem Hinterachsträger 1 eines nicht näher dargestellten Kraftfahrzeugs vorgesehen und weist ein separates, topfförmiges Teil 2 auf, das ein aus einer Blechplatte geformtes Tiefziehteil ist. An mehreren, nicht dargestellten elastischen Lagerstellen ist der Hinterachsträger 1 mit dem Boden der Karosserie des Kraftfahrzeugs verbunden. Der Hinterachsträger 1 bildet ein Stützelement mit zwei einen Abstand voneinander aufweisenden Wandbereichen 5, 6, die durch Blechteile gebildet sind. Das separate Teil 2 bildet an seiner Innenseite eine kegelstumpfförmige Aufnahme 3 und ist an seinem offenen Randbereich mit einem radial vorstehenden Kragen 4 versehen. Jeweils an der Innenseite der Wandbereiche 5, 6 anliegend ist das separate Teil 2 einerseits im Bereich des radialen Kragens 4 und andererseits im Bodenbereich seiner topfförmigen Aufnahme 3 über mehrere Schweißpunkte 7, 8, 9 mit den Wandbereichen 5, 6 verbunden, wobei der radial vorstehende Kragen 4 flächig von innen an dem Wandbereich 5 anliegt.

In dem Wandbereich 5 des Hinterachsträgers 1 ist eine Durchtrittsöffnung 10 ausgebildet, die mit dem offenen Randbereich des separaten Teiles 2 fluchtet. Eine zwischen einem Radführungselement oder einem Radträger und einem Federteller 11 angeordnete Schraubenfeder 12 stützt sich über ein elastisches Unterlagsteil 13 axial an einer Stützschulter 14 des Federtellers 11 ab. Der Federteller 11 weist einen axial zu der Aufnahme 3 abstehenden kegelstumpfförmigen Ansatz 15 auf, der mit seiner kegelstumpfförmigen Außenfläche an die kegelstumpfförmige Innenfläche der Aufnahme 3 angepasst ist und nach der Montage des Federtellers axial in die kegelstumpfförmige Aufnahme 3 eingreift. Damit der kegelstumpfförmigen Ansatz 15 in die kegelstumpfförmige Aufnahme 3 eingesteckt werden kann, ist die Durchtrittsöffnung im Durchmesser zumindest etwas größer als der Außendurchmesser des im Querschnitt kreisförmigen kegelstumpfförmigen Ansatzes 15 im Basisbereich. In der dargestellten Einbaulage liegt der Federteller mit einem die Stützschulter 14 bildenden kreisringförmigen Bereich 16 an dem Randbereich der Durchtrittsöffnung 10 an oder weist vorzugsweise einen zumindest kleinen Abstand davon auf. Die Kegelwinkel des kegelstumpfförmigen Ansatzes 15 und der kegelstumpfförmigen Aufnahme 3 sind derart aneinander angepasst, dass nach der Montage des Federtellers 11 der kegelstumpfförmige Ansatz 15 lediglich derart in der kegelstumpfförmigen Aufnahme durch Reibwirkung festgehalten ist, dass durch eine ausreichende axiale Lösekraft der kegelstumpfförmige Ansatz 15 aus der kegelstumpfförmigen Aufnahme 3 axial zu entnehmen ist. Die Lösekraft kann beispielsweise über einen in die Fuge 17 zwischen dem kreisringförmigen Bereich 16 des Federtellers 11 und dem Wandbereich 5 eingreifenden oder eindringenden Schraubenfeder, der dann gekippt wird, aufgebracht werden.

Eine wesentlicher Vorteil der Abstütz- und Zentriereinrichtung ist auch, dass vor der Montage des Federtellers 11, der mit der Schraubenfeder 12 und dem Unterlagsteil 13 sowie eventuell weiteren Teilen zu einer Montageeinheit verbunden sein kann, ohne eine Behinderung durch einen Federteller 11 der Hinterachsträger 1 und/oder der Boden der Karosserie mit einer Beschichtung, beispielsweise einem Unterboden- bzw. Steinschlagschutz versehen werden kann. In diesem Fall ist der innere Wandbereich der kegelstumpfförmigen Aufnahme 3 abzudecken. Außerdem kann ohne eine Behinderung durch den Federteller 11 vor der Montage des Federtellers 11 beispielsweise eine Dichtmasse in den nach der Montage des Federtellers 11 verbleibenden freien Raum 18 eingebracht werden, der sich im Übergangsbereich von dem Randbereich der Durchtrittsöffnung 10 zu dem inneren Rand des radialen Kragens 4 an dem separaten Teil 2 befindet.

Beispielsweise bei in unterschiedlichen Ausführungen gefertigten Fahrzeugen einer Baureihe kann der Federteller 11 durch einen anderen Federteller ersetzt werden, der mit einem mit dem axialen kegelstumpfförmigen Ansatz 15 vergleichbaren kegelstumpfförmigen Ansatz gefertigt ist, jedoch ein anderes Aufnahmeteil für das Federelement aufweist, an dem sich ein im Durchmesser größeres oder kleineres Federelement oder bei gleichem oder anderem Durchmesser ein andersartiges Federelement, beispielsweise eine Schraubenfeder oder Luftfeder, axial abstützen kann. Damit das Einbringen des kegelstumpfförmigen Ansatzes 15 in die innere Ausnehmung der kegelstumpfförmigen Aufnahme 3 nicht durch ein eventuell zwischen diesen Teilen gebildetes Luftpolster behindert wird, ist im Bodenbereich der kegelstumpfförmigen Aufnahme 3 eine Öffnung 19 gebildet, die mit einer weiteren Öffnung im oberen Wandbereich 6 fluchtet. In einem etwa zylindrischen Ansatz 20 des Federtellers 11 ist eine radiale Ausnehmung 21 gebildet.

An dem Federteller der Abstütz- und Zentriereinrichtung kann sich ein beliebiges Federelement abstützen. Der Federteller, die kegelstumpfförmige Aufnahme und das Stützelement können ein- oder mehrteilig aus einem beliebigen Material gefertigt sein. Das Stützelement kann ein beliebiges Bauteil sein, das fest oder beweglich angeordnet ist. Das die kegelstumpfförmige Aufnahme bildende separate Teil kann auf beliebige Weise an dem Stützelement befestigt oder zu befestigen sein. Das bei dem Ausführungsbeispiel verwendete Unterlagsteil zwischen dem Federteller und dem Federelement kann aus einem beliebigen, vorzugsweise elastischen und/oder dämpfenden Material gefertigt sein oder entfallen.

## Patentansprüche

1. Abstütz- und Zentriereinrichtung für einen Federteller (11), insbesondere eines Kraftfahrzeugs, mit einer kegelstumpfförmigen Aufnahme (3) an einem Stützelement (1), in die ein kegelstumpfförmiger Ansatz (15) an dem Federteller (11) einsteckbar ist, an dem sich ein Federelement (12) abstützt, das den kegelstumpfförmigen Ansatz (15) in die Aufnahme (3) belastet, und die kegelstumpfförmige Aufnahme (3) durch ein separates Teil (2) gebildet ist, das an seinem zum Federelement (12) gerichteten offenen Randbereich einen radial vorstehenden Wandbereich (4) aufweist, der fest oder lösbar mit dem Stützelement (1) verbunden oder zu verbinden ist, **dadurch gekennzeichnet, dass** die kegelstumpfförmige Aufnahme (3) topfförmig ausgebildet ist und der radial vorstehende Wandbereich (4) durch einen radial vorstehenden Kragen (4) gebildet ist, der mit dem Stützelement (1) lösbar oder unlösbar verbunden ist.

2. Abstütz- und Zentriereinrichtung nach Anspruch 1, **dadurch gekennzeichnet, dass** das Federelement (12) axial von dem kegelstumpfförmigen Ansatz (15) entfernt an dem Federteller (11) abgestützt ist.

3. Abstütz- und Zentriereinrichtung nach Anspruch 1 oder zwei, **dadurch gekennzeichnet, dass** das Stützelement (1) einen durch ein Blechteil gebildeten Wandbereich (5, 6) aufweist, an dem die kegelstumpfförmige Aufnahme (3) befestigt ist.

4. Abstütz- und Zentriereinrichtung nach einem der Ansprüche 1 bis 3, **dadurch gekennzeichnet, dass** die kegelstumpfförmige Aufnahme (3) auf der von dem Federelement (12) abgewandten Seite an einem Wandbereich (5) des Stützelements (1) befestigt ist und in dem Wandbereich (5) eine Durchtrittsöffnung (10) ausgebildet ist, durch die der kegelstumpfförmige Ansatz (15) des Federtellers (11) in die kegelstumpfförmige Aufnahme (3) des separaten Teiles (2) einsteckbar ist.

5. Abstütz- und Zentriereinrichtung nach Anspruch 4, **dadurch gekennzeichnet, dass** der radial vorstehende Kragen (4) flächig an dem Wandbereich (5) anliegt und über wenigstens eine Schweißnaht oder Schweißpunkte (7, 8, 9) mit dem Wandbereich (5) oder zusätzlich mit einem weiteren Wandbereich (6) verbunden ist.

6. Abstütz- und Zentriereinrichtung nach einem der Ansprüche 1 bis 5, **dadurch gekennzeichnet, dass** das Stützelement ein Hinterachsträger (1) eines Kraftfahrzeugs ist, der an mehreren elastischen Lagerstellen mit dem Boden der Karosserie des Kraftfahrzeugs verbunden ist.

7. Abstütz- und Zentriereinrichtung nach einem der Ansprüche 1 bis 6, **dadurch gekennzeichnet, dass** das Stützelement (1) zwei einen Abstand voneinander aufweisende Wandbereiche (5, 6) aufweist, die durch Blechteile gebildet sind, zwischen denen zumindest ein größerer Bereich der kegelstumpfförmigen Aufnahme (3) angeordnet ist, die mit wenigstens einem Wandbereich (5, 6) der beiden Wandbereiche (5, 6) verbunden ist.

8. Abstütz- und Zentriereinrichtung nach Anspruch 7, **dadurch gekennzeichnet, dass** die kegelstumpfförmige, topfartige Aufnahme (3) an ihrem Bodenbereich und an einem radial vorstehenden Kragen (4) am offenen Randbereich der Aufnahme (3) jeweils an der Innenseite der beiden Wandbereiche (5, 6) mit diesen über eine Schweißnaht oder Schweißpunkte (7, 8, 9) verbunden ist.

9. Abstütz- und Zentriereinrichtung nach einem der Ansprüche 1 bis 8, **dadurch gekennzeichnet, dass** vor dem Einstecken des kegelstumpfförmigen Ansatzes (15) des Federtellers (11) in die im Neigungswinkel an den Ansatz (15) angepasste kegelstumpfförmige Aufnahme (3) des separaten Teiles (2) auf die Oberfläche des Stützelements (1) zumindest im Umgebungsbereich der separaten Aufnahme (3) eine Beschichtung, beispielsweise ein Steinschlagschutz oder eine Dichtmasse, aufgebracht und zuvor die Innenseite der kegelstumpfförmigen Aufnahme (3) abgedeckt wurde.

10. Abstütz- und Zentriereinrichtung nach einem der Ansprüche 1 bis 9, **dadurch gekennzeichnet, dass** der Federteller (11) durch einen anderen Federteller mit einem in die kegelstumpfförmige Aufnahme (3) passenden kegelstumpfförmigen Ansatz (15) auszutauschen ist, an dem sich ein im Durchmesser größeres oder kleineres Federelement oder bei gleichem Durchmesser ein andersartiges Federelement, beispielsweise eine Schraubenfeder oder Gasfeder, abstützen kann.

## Claims

1. A support and centring device for a spring plate (11), especially of a motor vehicle, with a truncated cone-shaped receiver (3) on a support element (1), into which a truncated cone-shaped protrusion (15) on the spring plate (11) can be inserted, on which a spring element (12) is supported, which loads the truncated cone-shaped protrusion (15) into the receiver (3), and the truncated cone-shaped receiver (3) is formed by a separate part (2), which, on its open edge region directed to the spring element (12), has a radially projecting wall region (4), which is connected or is to be connected, rigidly or releasably, to the support element (1), **characterised in that** the truncated cone-shaped receiver (3) is pot-shaped and the radially projecting wall region (4) is formed by a radially projecting collar (4), which is releasably or non-releasably connected to the support element (1).

2. A support and centring device according to claim 1 , **characterised in that** the spring element (12) is supported on the spring plate (11) axially remote from the truncated cone-shaped protrusion (15).

3. A support and centring device according to claim 1 or claim 2, **characterised in that** the support element (1) has a wall region (5, 6) formed by a sheet metal part, on which wall region the truncated cone-shaped receiver (3) is fastened.

4. A support and centring device according to any one of claims 1 to 3, **characterised in that** the truncated cone-shaped receiver (3) is fastened on the side remote from the spring element (12) on a wall region (5) of the support element (1) and a through-opening (10) is formed in the wall region (5), through which the truncated cone-shaped protrusion (15) of the spring plate (11) can be inserted into the truncated cone-shaped receiver (3) of the separate part (2).

5. A support and centring device according to claim 4, **characterised in that** the radially projecting collar (4) rests flat on the wall region (5) and is connected by means of at least one weld seam or weld points (7, 8, 9) to the wall region (5) or additionally to a further wall region (16).

6. A support and centring device according to any one of claims 1 to 5, **characterised in that** the support element is a rear axle support (1) of a motor vehicle, which is connected at a plurality of elastic bearing points to the base of the body of the motor vehicle.

7. A support and centring device according to any one of claims 1 to 6, **characterised in that** the support element (1) has two wall regions (5, 6) having a spacing from one another, which are formed by sheet metal parts, between which at least one larger region of the truncated cone-shaped receiver (3) is arranged, which is connected to at least one wall region (5, 6) of the two wall regions (5, 6).

8. A support and centring device according to claim 7, **characterised in that** the truncated cone-shaped, pot-like receiver (3) is connected at its base region and at a radially projecting collar (4) on the open edge region of the receiver (3) at the respective inner side of the two wall regions (5, 6) to the latter via a weld seam or weld points (7, 8, 9).

9. A support and centring device according to any one of claims 1 to 8, **characterised in that** before the insertion of the truncated cone-shaped protrusion (15) of the spring plate (11) into the truncated cone-shaped receiver (3), which is adapted with respect to the angle of inclination to the protrusion (15), of the separate part (2), a coating, for example a stone chip protection or a sealing compound, was applied to the surface of the support element (1) at least in the surrounding region of the separate receiver (3) and, beforehand, the inside of the truncated cone-shaped receiver (3) was covered.

10. A support and centring device according to any one of claims 1 to 9, **characterised in that** the spring plate (11) is to be exchanged for another spring plate with a truncated cone-shaped protrusion (15) fitting into the truncated cone-shaped receiver (3), on which protrusion a spring element, which is larger or smaller with respect to diameter, or, with the same diameter, a different construction of spring element, for example a helical spring or gas spring, can be supported.

## Revendications

1. Installation de support et de centrage pour une coupelle de ressort (11) notamment d'un véhicule automobile, ayant un logement (3) de forme tronconique à l'élément d'appui (1) dans lequel peut s'engager un prolongement (15) de forme tronconique de la coupelle à ressort (11), contre laquelle s'appuie l'élément de ressort (12) et qui pousse le prolongement (15) de forme tronconique dans le logement (3), et
le logement de forme tronconique (3) est constitué par une pièce (2), distincte, dont la zone de bord ouvert, dirigée vers l'élément de ressort (12) comporte une zone de paroi (4) radialement en saillie, reliée ou susceptible d'être reliée solidairement ou de manière amovible à l'élément de support (1),
**caractérisée en ce que**
le logement de forme tronconique (3) a une forme de pot et la zone de paroi (4) radialement en saillie est constituée par une collerette (4) radialement en saillie, et reliée de manière amovible ou inamovible à l'élément de support (1).

2. Installation de support et de centrage selon la revendication 1,
**caractérisée en ce que**
l'élément de ressort (12) est appuyé axialement contre la coupelle de ressort (11) de façon éloignée du prolongement (15) de forme tronconique.

3. Installation de support et de centrage selon la revendication 1 ou 2,
**caractérisée en ce que**
l'élément de support (1) comporte une zone de paroi (5, 6) constituée par une pièce en tôle et à laquelle est fixé le logement (3) de forme tronconique.

4. Installation de support et de centrage selon l'une des revendications 1 à 3,
**caractérisée en ce que**
le logement (3) de forme tronconique est fixé sur le côté non tourné vers l'élément de ressort (12) à une zone de paroi (5) de l'élément de support (1) et un orifice de passage (10) est réalisé dans la zone de paroi (5) à travers lequel le prolongement (15) de forme tronconique de la coupelle à ressort (11) peut s'engager dans le logement (3) de forme tronconique de la pièce séparée (2).

5. Installation de support et de centrage selon la revendication 4,
**caractérisée en ce que**
la collerette (4) radialement en saillie est appliquée à plat contre la zone de paroi (5) et est reliée par au moins un cordon de soudure ou par des points de soudure (7, 8, 9) à la zone de paroi (5) ou en plus à une autre zone de paroi (6).

6. Installation de support et de centrage selon l'une des revendications 1 à 5,
**caractérisée en ce que**
l'élément de support est le support d'essieu arrière (1) d'un véhicule automobile relié au plancher de la carrosserie par plusieurs points de palier, élastiques.

7. Installation de support et de centrage selon l'une des revendications 1 à 6,
**caractérisée en ce que**
l'élément de support (1) comporte deux zones de paroi (5, 6) écartées l'une de l'autre, constituées par des pièces de tôle et entre lesquelles se trouve au moins une plus grande zone du logement (3) de forme tronconique reliée au moins à une zone de paroi (5, 6) des deux zones de paroi (5, 6).

8. Installation de support et de centrage selon la revendication 7,
**caractérisée en ce que**
le logement (3) de forme tronconique, en pot, est relié au niveau de son fond et au niveau d'une collerette (4) radialement en saillie à la zone de bord ouvert du logement (3) chaque fois au niveau du côté intérieur des deux zones de paroi (5, 6) par l'intermédiaire d'un cordon de soudure ou de points de soudure (7, 8, 9).

9. Installation de support et de centrage selon l'une des revendications 1 à 8,
**caractérisée en ce qu'**
avant d'engager le prolongement (15) de forme tronconique de la coupelle de ressort (11) dans le logement (3) de forme tronconique, dont l'angle au sommet est adapté à celui du prolongement (15) pour la pièce séparée (2) sur la surface de l'élément d'appui (1), au moins dans l'environnement du logement séparé (3), on applique un revêtement, par exemple un revêtement anti-projection de gravillons ou une masse d'étanchéité et ce revêtement est couvert par le côté intérieur du logement (3) de forme tronconique.

10. Installation de support et de centrage selon l'une des revendications 1 à 9,
**caractérisée en ce que**
la coupelle à ressort (11) est remplacée par une autre coupelle à ressort ayant un prolongement (15) de forme tronconique adapté au logement (3) de forme tronconique, et un élément de ressort de diamètre plus grand ou plus petit ou de même diamètre d'un autre élément de ressort, par exemple d'un ressort hélicoïdal ou d'un ressort à gaz, peut s'appuyer contre ce prolongement.
